# FASCICULE DE BREVET EUROPEEN

(11) **EP 2 466 673 B1**
(45) Date de publication et mention de la délivrance du brevet: **22.03.2017**
(21) Numéro de dépôt: 11193831.2
(22) Date de dépôt: 15.12.2011
(51) Int. Cl.: H01M 8/1226, H01M 8/126, H01M 4/86, H01M 4/88, H01M 8/023, H01M 4/90, H01M 8/0236, H01M 8/0245, H01M 8/124

(54) **Pile à combustible avec ensemble électrolytes-membrane monolithique**
Brennstoffzelle mit monolithischer Elektrolyt-Membran-Anordnung
Fuel cell with monolithic electrolyte-membrane assembly

(30) Priorité: 17.12.2010 FR 1060705
(43) Date de publication de la demande: 20.06.2012
(73) Titulaire: ASSOCIATION POUR LA RECHERCHE ET LE DEVELOPPEMENT DES METHODES ET PROCESSUS INDUSTRIELS (ARMINES), F-75006 Paris (FR)
(72) Inventeur: Chesnaud, Antony, 77340 Pontault-Combault (FR); Viviani, Massimo, 16014 Campomorone (IT); Presto, Sabrina, 16166 Genova (IT); Thorel, Alain, 91770 Saint-Vrain (FR); Stoynov, Zdravko Borissov, 1113 Sofia (BG); Vladikova, Daria Evgenieva, 1192 Sofia (BG)
(74) Mandataire: Intès, Didier Gérard André

(56) Documents cités:
- WO-A1-2005/086272
- WO-A2-2006/097663
- WO-A2-2009/058388
- JP-A- 2009 054 519
- US-A1- 2006 093 884
- US-A1- 2006 199 058
- US-A1- 2010 167 169
- XIAN-ZHU FU, JING-LI LUO, ALAN R. SANGER, ZHENG-RONG XU, KARL T. CHUANG: "Fabrication of bi-layered proton conducting membrane for hydrocarbon solid oxide fuel cell reactors", ELECTROCHIMICA ACTA, vol. 55, 13 octobre 2009 (2009-10-13), pages 1145-1149, XP002630795,
- HA S B ET AL: "Effect of oxide additives on the sintering behavior and electrical properties of strontium- and magnesium-doped lanthanum gallate", JOURNAL OF THE EUROPEAN CERAMIC SOCIETY, ELSEVIER SCIENCE PUBLISHERS, BARKING, ESSEX, GB, vol. 30, no. 12, 1 septembre 2010 (2010-09-01), pages 2593-2601, XP027107080, ISSN: 0955-2219 [extrait le 2010-06-25]
- BABILO P; HAILE S M: "Enhanced sintering of yttrium-doped barium zirconate by addition of ZnO", JOURNAL OF THE AMERICAN CERAMIC SOCIETY, vol. 88, no. 9, septembre 2005 (2005-09), pages 2362-2365, XP002630796, DOI: 10.1111/j.1551-2916.2005.00449.x

## Description

La présente invention concerne une pile à combustible comprenant une anode apte à oxyder un premier composé M1 en premiers ions M^{(m+)} avec m entier non-nul, un premier électrolyte qui est apte à conduire ces premiers ions M^{(m+)}, et qui est en contact avec cette anode, une cathode apte à réduire un second composé N2 en seconds ions N⁽ⁿ⁻⁾ avec n entier non-nul, un second électrolyte qui est apte à conduire ces seconds ions N⁽ⁿ⁻⁾, et qui est en contact avec cette cathode, une membrane centrale poreuse dont une des faces est en contact avec le premier électrolyte, et dont la face opposée est en contact avec le second électrolyte.

Les piles à combustible (PAC) sont amenées à devenir une source de production d'énergie alternative à celles provenant directement des ressources fossiles, pour les applications stationnaires, mais aussi pour les applications embarquées (par exemple l'automobile) à plus long terme.

Une PAC fonctionne sur le principe d'une oxydo-réduction électrochimique et contrôlée d'un premier composé M1 et d'un second composé N2, avec production simultanée d'électricité, du composé P et de chaleur, selon la réaction chimique globale

{n M1 + m N2 → p P}

avec n, m, et p entiers non-nuls.
M1 désigne un composé d'atomes identiques ou distincts qui, en s'oxydant, donne un premier ion M^{(m+)} (ou m premiers ions M⁺) et m électrons.
N2 désigne un composé d'atomes identiques ou distincts qui, par réduction en présence de n électrons, donne un second ion N⁽ⁿ⁻⁾ (ou n seconds ions N⁻).

C'est cette électricité produite qui peut ensuite alimenter en énergie un dispositif.

Par exemple, la PAC est telle que le premier composé M1 est l'hydrogène (H₂) et le second composé N2 est l'oxygène (O₂), et la réaction chimique globale est

{H₂ + ½ O₂ → H₂O}.

Le composé produit de cette réaction est l'eau H₂O.

On considère ci-dessous l'exemple d'une telle PAC.

Les inventeurs ont déjà mis au point une PAC à conduction mixte anionique et protonique (demande de brevet WO 2006/097663) illustrée en figure 2, et dont le fonctionnement est rappelé ci-après.

Cette PAC 1 comprend cinq couches principales qui sont deux à deux en contact et dont l'empilement est, dans cet ordre :
- Une anode 10,
- Un premier électrolyte 20,
- Une membrane centrale 30,
- Un second électrolyte 40,
- Une cathode 50.

L'anode 10 est le siège d'une réaction d'oxydation de l'hydrogène :

{H₂ → 2H⁺ + 2 e⁻}.

Les protons H⁺ ainsi créés migrent vers la membrane centrale 30 au travers du premier électrolyte 20. Ce premier électrolyte 20 est donc un matériau apte à conduire les protons H⁺.

Les électrons e⁻ produits circulent par l'extérieur de la PAC depuis l'anode 10 au travers d'un conducteur 90 pour rejoindre la cathode 50 et l'alimenter en électrons (voir ci-dessous).

La cathode C est le siège d'une réaction de réduction de l'oxygène :

{½ O₂ + 2 e⁻ → O²⁻}

Les ions O²⁻ ainsi créés migrent vers la membrane centrale 30 au travers du second électrolyte 40. Ce second électrolyte 40 est donc un matériau apte à conduire les ions O²⁻.

Ainsi une première face de la membrane centrale 30 est en contact avec le premier électrolyte 20, et une seconde face de la membrane centrale 30, opposée à cette première face, est en contact avec le second électrolyte 40.

La membrane centrale 30 est un composite du premier électrolyte 20 et du second électrolyte 40, de façon à être apte à conduire à la fois les protons H⁺ et les ions O²⁻.

Au sein de cette membrane centrale 30, ces protons H⁺ et ces ions O²⁻ réagissent selon la réaction suivante afin de produire de l'eau :

{2H⁺ + O²⁻ → H₂O}

Cette membrane centrale 30 est en outre poreuse avec des porosités 35, afin de permettre une meilleure évacuation de l'eau ainsi produite.

Une telle PAC présente, par rapport aux PAC à conduction simple, l'avantage d'évacuer l'eau au niveau de la membrane centrale 30 et non pas aux électrodes (anode et cathode) : en effet, lorsque l'eau est évacuée à l'anode ou à la cathode, l'eau neutralise les sites actifs (sites d'oxydation de l'hydrogène ou de réduction de l'oxygène) dans ces électrodes.

Cependant, cette PAC, et en général une PAC fonctionnant par oxydo-réduction d'un premier composé M1 et d'un second composé N2, présente des inconvénients :
D'une part la fabrication de la membrane centrale 30, en général par frittage, est complexe à cause des incompatibilités physico-chimiques et thermomécaniques (coefficients de dilatation thermique différents) entre le matériau du premier électrolyte 20 et le matériau du second électrolyte 40, et à cause de l'écart de température de frittage entre ces deux matériaux.

D'autre part ces incompatibilités entrainent un vieillissement prématuré de la membrane centrale 30 avec déformation et/ou fissurations de la membrane centrale 30, et/ou obturations de son réseau de porosités. Il en résulte une réduction importante des performances de la PAC.

La présente invention vise à remédier à ces inconvénients.

Le document JP 2009 054519 divulgue une pile à combustible avec, empilées dans cet ordre, une anode 10, un premier électrolyte 30d, un deuxième électrolyte 40d, un troisième électrolyte 45d, et une cathode. Le premier électrolyte 30a est constitué de cérate de barium BaCe_{0,8}Y_{0,2}O₃ et de métal, et le deuxième électrolyte 40 est constitué de cérate de barium.

Le document WO 2005/086272 divulgue une pile à combustible qui comprend trois couches, dans laquelle la couche électrolytique 21 conduit les protons, la réaction électrolytique se produisant à l'interface de la couche 21 avec la cathode 24. Ce document divulgue également une pile à combustible qui comprend trois couches (125, 126, 127), la couche centrale 127 étant en BaCeO₃, les couches latérales 125 et 126 présentant une stabilité chimique supérieure à celle de la couche centrale 127.

Le document de Xian-Zhu Fu, « Fabrication of bi-layered proton conducting membrane for hydrocarbon solid oxide fuel cell reactors », Electrochimica acta, Vol.55, pp.1145-1149, 13 Oct. 2009, divulgue une pile SOFC à conduction simple qui comprend deux couches en BCY15.

Le document de S.B.Ha et al, « Effect of oxide additives on the sintering behavior and electrical properties of strontium- and magnesium-doped lanthanum gallate », J. Europ. Ceramic Soc., Vol.30, no.12, pp.2593-2601, 01 Sept. 2010, concerne les effets d'additions de divers oxides sur le frittage et les propriétés électriques de gallate de lanthane dopés au strontium et au magnésium.

Le document de P.Babilo et al, « Enhanced sintering of yttrium-doped barium zirconate by addition of ZnO », J. Am. Ceramic Soc., Vol.88, no.9, pp.2362-2365, Sept. 2005, concerne l'influence d'additions de divers oxides sur le frittage et les propriétés électriques de zirconate de barium dopés.

Le document US 2010/167169 divulgue un matériau collecteur de courant à l'anode de piles à combustible.

L'invention vise à proposer une pile à combustible dont la fabrication soit facilitée, et dont l'efficacité en fonctionnement soit améliorée, et dont la tenue de vie soit augmentée.

Ce but est atteint grâce au fait que le premier électrolyte, le second électrolyte, et la membrane centrale sont constitués du même matériau qui est apte à conduire à la fois les ions M^{(m+)} et les ions N⁽ⁿ⁻⁾.

Grâce à ces dispositions, la fabrication de la pile à combustible est grandement simplifiée, car l'ensemble constitué du premier électrolyte, de la membrane centrale, et du second électrolyte peut être fabriqué en une seule opération, par exemple par frittage. La résistance mécanique et la durabilité de cet ensemble sont également améliorées.

De plus, la superficie des sites de réaction possibles au sein de la membrane centrale est fortement augmentée. En effet, dans une PAC selon l'art antérieur, les sites de réaction entre les premiers ions (par exemple les protons H⁺) et les seconds ions (par exemple les ions O²⁻) au sein de la membrane centrale sont limités aux interfaces communes entre le matériau du premier électrolyte, le matériau du second électrolyte, et les porosités, c'est-à-dire que ces sites de réaction sont à une dimension (pluralité de courbes dans l'espace). En revanche, dans une PAC selon l'invention, les sites de réaction possibles sont constitués par les surfaces libres du matériau de la membrane centrale (c'est-à-dire l'interface entre ce matériau et les porosités). Les sites de réaction sont donc à deux dimensions (pluralité de surfaces dans l'espace), c'est-à-dire beaucoup plus nombreux. En parallèle, la résistance interne de la membrane centrale est diminuée car celle-ci présente la même conductivité ionique en tout point, à savoir la conductivité ionique du matériau la constituant
(alors que dans l'art antérieur la conductivité ionique varie dans l'espace entre celle du premier électrolyte et celle du second électrolyte, ce qui rend plus tortueux les chemins de circulation des ions, et donc augmente la résistance interne de la membrane centrale).

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une représentation schématique d'une pile à combustible selon l'invention.
- la figure 2 est une représentation schématique d'une pile à combustible selon l'art antérieur.

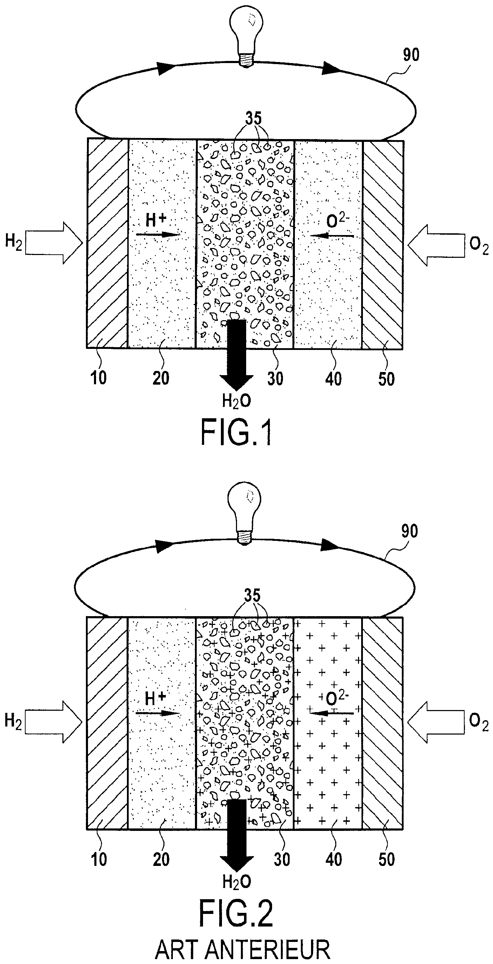

La figure 1 illustre une pile à combustible (PAC) selon l'invention.

Cette PAC 1 comprend cinq couches principales qui sont deux à deux en contact et dont l'empilement est, dans cet ordre :
- Une anode 10,
- Un premier électrolyte 20,
- Une membrane centrale 30,
- Un second électrolyte 40,
- Une cathode 50.

Dans la description ci-dessous, on considère une PAC où le premier composé M1 est l'hydrogène (H₂) et le second composé N2 est l'oxygène (O₂). Cependant, l'invention s'applique aussi à des réactions où le premier composé n'est pas l'hydrogène et/ou le second composé n'est pas l'oxygène.

L'anode 10 est le siège de la réaction d'oxydation de l'hydrogène :

{H₂ → 2H⁺ + 2 e⁻}.

La cathode 50 est le siège de la réaction de réduction de l'oxygène :

{½ O₂ + 2 e⁻ → O²⁻}

Le premier électrolyte 20, le second électrolyte 40, et la membrane centrale 30 sont chacun constitués d'un matériau apte à conduire les protons H⁺ et apte à conduire les ions O²⁻.

Les électrons e⁻ produits circulent par l'extérieur de la PAC depuis l'anode 10 au travers d'un conducteur 90 pour rejoindre la cathode 50 et l'alimenter en électrons.

Ainsi une première face de la membrane centrale 30 est en contact avec le premier électrolyte 20, et une seconde face de la membrane centrale 30, opposée à cette première face, est en contact avec le second électrolyte 40.

Cette membrane centrale 30 est en outre poreuse avec des porosités 35, afin de permettre une meilleure évacuation de l'eau ainsi produite dans la réaction

{2H⁺ + O²⁻ → H₂O}

Dans le cas d'une PAC fonctionnant sur la base d'une réaction différente de celle-ci, c'est le composé P, produit de cette réaction différente, qui est avantageusement évacué au travers des porosités 35.

L'ensemble formé par le premier électrolyte 20, le second électrolyte 40, et la membrane centrale 30, est donc un bloc d'un même matériau, la membrane centrale 30 présentant en supplément des porosités 35, tandis que les électrolytes sont denses. Cet ensemble est donc monolithique.

Par exemple, ce matériau est une céramique, qui présente l'avantage d'un contrôle de sa porosité durant la fabrication de la PAC, par exemple par frittage.

Les essais réalisés par les inventeurs ont montré, de façon inattendue, que la conduction mixte simultanée des protons H⁺ et des ions O²⁻ au sein de la membrane centrale 30 n'est pas erratique, mais au contraire se produit de façon efficace.

En particulier, les inventeurs ont montré qu'une telle céramique à conduction mixte utilisable comme matériau pour la PAC est par exemple un cérate de barium de formule BaCe_{0,85}Y_{0,15}O_{3-δ} avec δ positif, petit devant 1.

Ce matériau est désigné par BCY15 et présente une bonne conduction à la fois des protons H⁺ et des ions O²⁻.

Avantageusement, le fonctionnement de la PAC s'effectue à une température comprise entre 500°C et 800°C.

En effet, les inventeurs ont montré que le rendement de la PAC était supérieur dans cette plage de températures.

Les inventeurs ont réalisé une PAC selon l'invention comprenant plusieurs couches par combinaison des procédés suivants :
- La formation et l'assemblage du premier électrolyte 20, du second électrolyte 40, et de la membrane centrale 30 par une compression à froid et un frittage du matériau constituant ces couches,
- La fixation de l'anode 10 sur le premier électrolyte 20 et de la cathode 50 sur le second électrolyte 40 par un procédé de déposition, par exemple la sérigraphie ou le coulage en bande (en anglais "tape casting"),
- La densification du premier électrolyte 20 et du second électrolyte 40 lors du frittage,
- L'ajustement de la porosité de la membrane centrale 30.

Ce procédé de fabrication permet de faciliter la fabrication d'une PAC selon l'invention.

La densification du premier électrolyte 20 et du second électrolyte 40 peut être réalisée par l'ajout d'un agent de densification tel que ZnO ou CuO lors du frittage.

La porosité de la membrane centrale 30 peut être réalisée et/ou ajustée par l'ajout d'additifs favorisant la formation de pores lors du frittage, et/ou une température de frittage plus basse.

L'anode 10 et la cathode 50 sont par exemple une céramique ou un cermet (composite céramique-métal) qui sont fabriqués selon des procédés connus.

Par exemple, la composition d'une PAC, où on utilise la notation {anode/^{1er} électrolyte/membrane centrale/2^{ème} électrolyte/cathode} est une des suivantes :
BCY15-Ni/BCY15 dense/BCY poreux/BCY15 dense/BCY15-LSCF
   ou
BCY15-Ni/BCY15 dense/BCY poreux/BCY15 dense/BCY15-Ag
où LSCF désigne la céramique de formule La_{1-X}Sr_{X}CO_{1-Y}Fe_{Y}O_{3-δ} avec X et Y compris entre 0 et 1, et δ positif, petit devant 1.

Avantageusement, avant la fixation de l'anode 10 sur une face du premier électrolyte 20 et de la cathode 50 sur une face du second électrolyte 40, on dépose sur ces faces une couche de matériau poreux qui sert d'accroche à l'anode 10 et à la cathode 50.

Dans le cas général d'une PAC fonctionnant sur le principe d'une oxydo-réduction électrochimique et contrôlée d'un premier composé (M1) et d'un second composé (N2), les conclusions ci-dessus sont applicables, le même matériau utilisé comme premier électrolyte, second électrolyte, et membrane centrale étant apte à conduire à la fois les ions M^{(m+)} et les ions N⁽ⁿ⁻⁾.

Ce matériau est par exemple une céramique.

## Revendications

1. Pile à combustible (1) comprenant
• une anode (10) apte à oxyder un premier composé M1 en premiers ions M^{(m+)} avec m entier non-nul,
• un premier électrolyte (20) qui est apte à conduire ces premiers ions M^{(m+)}, et qui est en contact avec ladite anode (10),
• une cathode (50) apte à réduire un second composé N2 en seconds ions N⁽ⁿ⁻⁾ avec n entier non-nul,
• un second électrolyte (40) qui est apte à conduire ces seconds ions N⁽ⁿ⁻⁾, et qui est en contact avec ladite cathode (50),
• une membrane centrale (30) poreuse dont une des faces est en contact avec ledit premier électrolyte (20), et dont la face opposée est en contact avec ledit second électrolyte (40),
ladite pile à combustible étant **caractérisée en ce que** ledit premier électrolyte (20), ledit second électrolyte (40), et ladite membrane centrale (30) sont constitués du même matériau qui est apte à conduire à la fois les ions M^{(m+)} et les ions N⁽ⁿ⁻⁾.

2. Pile à combustible (1) selon la revendication 1 **caractérisée en ce que** ledit premier composé M1 est de l'hydrogène H₂ qui est oxydé en ions H⁺, et le second composé N2 est de l'oxygène O₂ qui est réduit en ions O²⁻.

3. Pile à combustible (1) selon la revendication 1 ou 2 **caractérisée en ce que** ledit matériau constituant ladite membrane centrale (30) est une céramique.

4. Pile à combustible (1) selon les revendications 2 et 3 **caractérisée en ce que** ladite céramique est un cérate de barium de formule BaCe_{0,85}Y_{0,15}O_{3-δ} avec δ positif, petit devant 1.

5. Pile à combustible (1) selon l'une quelconque des revendications 2 à 4 **caractérisée en ce que** son fonctionnement s'effectue à une température comprise entre 500°C et 800°C.

6. Procédé de fabrication d'une pile à combustible selon l'une quelconque des revendications précédentes **caractérisé en ce qu'**il comprend les étapes suivantes :
• La formation et l'assemblage dudit premier électrolyte (20), dudit second électrolyte (40), et de ladite membrane centrale (30) par une compression à froid et un frittage du matériau constituant ces couches,
• La fixation de l'anode (10) sur ledit premier électrolyte (20) et de la cathode (50) sur ledit second électrolyte (40) par un procédé de déposition,
• La densification dudit premier électrolyte (20) et dudit second électrolyte (40) lors du frittage,
• L'ajustement de la porosité de ladite membrane centrale (30).

7. Procédé de fabrication d'une pile à combustible (1) selon la revendication 6 **caractérisé en ce que** l'ajustement de la porosité de ladite membrane centrale (30) est réalisé par l'ajout d'additifs favorisant la formation de pores lors du frittage, et/ou une température de frittage plus basse.

8. Procédé de fabrication d'une pile à combustible (1) selon la revendication 6 ou 7 **caractérisé en ce qu'**avant la fixation de ladite anode (10) sur une face dudit premier électrolyte (20) et de ladite cathode (50) sur une face dudit second électrolyte (40), on dépose sur ces faces une couche de matériau poreux qui sert d'accroche à ladite anode (10) et à ladite cathode (50).

## Patentansprüche

1. Brennstoffzelle (1), umfassend
- eine Anode (10), die geeignet ist, eine erste Verbindung M1 in erste Ionen M^{(m+)} zu oxydieren, wobei m eine ganze Zahl ungleich Null ist,
- ein erstes Elektrolyt (20), das geeignet ist, diese ersten Ionen M^{(m+)} zu leiten, und das mit der Anode (10) in Kontakt ist,
- eine Kathode (50), die geeignet ist, eine zweite Verbindung N2 in zweite Ionen N⁽ⁿ⁻⁾ zu reduzieren, wobei n eine ganze Zahl ungleich Null ist,
- ein zweites Elektrolyt (40), das geeignet ist, diese zweiten Ionen N⁽ⁿ⁻⁾ zu leiten, und das mit der Kathode (50) in Kontakt ist,
- eine poröse zentrale Membran (30), eine deren Seiten mit dem ersten Elektrolyt (20) in Kontakt ist, und deren gegenüberliegende Seite mit dem zweiten Elektrolyt (40) in Kontakt ist,
wobei die Brennstoffzelle **dadurch gekennzeichnet ist, dass** das erste Elektrolyt (20), das zweite Elektrolyt (40) und die zentrale Membran (30) aus demselben Material hergestellt sind, das geeignet ist, sowohl Ionen M^{(m+)} als auch Ionen N⁽ⁿ⁻⁾ zu leiten.

2. Brennstoffzelle (1) gemäß Anspruch 1, **dadurch gekennzeichnet, dass** die erste Verbindung M1 Wasserstoff H₂ ist, der zu Ionen H⁺ oxydiert ist, und die zweite Verbindung N2 Sauerstoff O₂ ist, der zu Ionen O²⁻ reduziert ist.

3. Brennstoffzelle (1) gemäß Anspruch 1 oder 2, **dadurch gekennzeichnet, dass** das Material, aus dem die zentrale Membran (30) besteht, eine Keramik ist.

4. Brennstoffzelle (1) gemäß den Ansprüchen 2 und 3, **dadurch gekennzeichnet, dass** die Keramik ein Bariumcerat mit der Formel BaCe_{0,85}Y_{0,15}O_{3-δ} ist, wobei ö positiv, klein vor 1 ist.

5. Brennstoffzelle (1) gemäß einem der Ansprüche 2 bis 4, **dadurch gekennzeichnet, dass** ihre Funktion bei einer Temperatur zwischen 500 °C und 800 °C stattfindet.

6. Verfahren zur Herstellung einer Brennstoffzelle gemäß einem der vorhergehenden Ansprüche, **dadurch gekennzeichnet, dass** es die folgenden Schritte umfasst:
- Bildung und Zusammenfügung des ersten Elektrolyts (20), des zweiten Elektrolyts (40) und der zentralen Membran (30) durch Kaltpressen und Sintern des Materials, aus dem diese Schichten bestehen,
- Befestigung der Anode (10) auf dem ersten Elektrolyt (20) und der Kathode (50) auf dem zweiten Elektrolyt (40) durch ein Aufbringungsverfahren,
- Verdichtung des ersten Elektrolyts (20) und des zweiten Elektrolyts (40) beim Sintern,
- Anpassung der Porosität der zentralen Membran (30).

7. Verfahren zur Herstellung einer Brennstoffzelle (1) gemäß Anspruch 6, **dadurch gekennzeichnet, dass** die Anpassung der Porosität der zentralen Membran (30) durch Hinzufügung von Zusatzstoffen erfolgt, die die Bildung von Poren während des Sinterns und/oder eine niedrigere Sintertemperatur begünstigen.

8. Verfahren zur Herstellung einer Brennstoffzelle (1) gemäß Anspruch 6 oder 7, **dadurch gekennzeichnet, dass** vor der Befestigung der Anode (10) auf einer Seite des ersten Elektrolyts (20) und der Kathode (50) auf einer Seite des zweiten Elektrolyts (40) auf diese Seiten eine poröse Materialschicht aufgebracht wird, die zur Befestigung der Anode (10) und der Kathode (50) dient.

## Claims

1. A fuel cell (1) comprising
- an anode (10) capable of oxidizing a first compound M1 into first ions M^{(m+)} with m being a non-zero integer,
- a first electrolyte (20) which is capable of conducting these first ions M^{(m+)}, and which is in contact with said anode (10),
- a cathode (50) capable of reducing a second compound N2 into second N⁽ⁿ⁻⁾ ions with n being a non-zero integer,
- a second electrolyte (40) which is capable of conducting these second ions N⁽ⁿ⁻⁾, and which is in contact with said cathode (50),
- a porous central membrane (30), one of the faces of which is in contact with said first electrolyte (20), and the opposite face of which is in contact with said second electrolyte (40),
said fuel cell being **characterized in that** said first electrolyte (20), said second electrolyte (40) and said central membrane (30) consist of the same material which is capable of conducting both M^{(m+)} ions and N⁽ⁿ⁻⁾ ions.

2. The fuel cell (1) according to claim 1, **characterized in that** said first compound M1 is hydrogen H₂ which is oxidized into H⁺ ions, and the second compound N2 is oxygen O₂ which is reduced into O²⁻ ions.

3. The fuel cell (1) according to claim 1 or 2, **characterized in that** said material making up said central membrane (30) is a ceramic.

4. The fuel cell (1) according to claims 2 and 3 **characterized in that** said ceramic is a barium cerate of formula BaCe_{0,85}Y_{0,15}O_{3-δ} with δ positive, small compared with 1.

5. The fuel cell (1) according to any of claims 2 to 4, **characterized in that** its operation is performed at a temperature comprised between 500°C and 800°C.

6. A method for manufacturing a fuel cell according to any of the preceding claims **characterized in that** it comprises the following steps:
- Forming and assembling said first electrolyte (20), said second electrolyte (40) and said central membrane (30) by cold compression and sintering of the material making up these layers,
- Attaching the anode (10) onto said first electrolyte (20) and the cathode (50) onto said second electrolyte (40) by a deposition method,
- Densifying said first electrolyte (20) and said second electrolyte (40) during sintering,
- Adjusting the porosity of said central membrane (30).

7. The method for manufacturing a fuel cell (1) according to claim 6, **characterized in that** the adjustment of the porosity of said central membrane (30) is achieved by addition of additives promoting the formation of pores during sintering, and/or by a lower sintering temperature.

8. The method for manufacturing a fuel cell (1) according to claim 6 or 7, **characterized in that** before attaching said anode (10) onto one face of said first electrolyte (20) and said cathode (50) onto one face of said second electrolyte (40), a layer of porous material is deposited on these faces, which is used for adhering to said anode (10) and to said cathode (50).
